# EUROPÄISCHE PATENTSCHRIFT

(11) **EP 3 617 512 B1**
(45) Veröffentlichungstag und Bekanntmachung des Hinweises auf die Patenterteilung: **30.11.2022**
(21) Anmeldenummer: 18191276.7
(22) Anmeldetag: 28.08.2018
(51) Int. Cl.: F04C 18/344

(54) **DREHSCHIEBER-VAKUUMPUMPE**
ROTARY VANE VACUUM PUMP
POMPE À VIDE DU DISTRIBUTEUR ROTATIF

(43) Veröffentlichungstag der Anmeldung: 04.03.2020
(73) Patentinhaber: PFEIFFER VACUUM GMBH, 35614 Asslar (DE)
(72) Erfinder: Oberbeck, Sebastian, 35781 Weilburg (DE)
(74) Vertreter: Manitz Finsterwald Patent- und Rechtsanwaltspartnerschaft mbB

(56) Entgegenhaltungen:
- EP-A1- 2 587 064
- EP-A1- 3 153 706
- DE-A1-102006 038 418
- US-A1- 2003 162 027

## Beschreibung

Die vorliegende Erfindung betrifft eine Drehschieber-Vakuumpumpe umfassend, einen Gehäusekörper, der mit einer Innenwand wenigstens einen Förderraum definiert, und einen Rotor, der zur Rotation im Förderraum angeordnet ist und einen Rotorkörper und wenigstens einen Schieber aufweist, wobei der Schieber radial über den Rotorkörper hervorsteht und zusammen mit der Innenwand des Gehäusekörpers ein Fördervolumen definiert, welches durch Rotation des Rotors von einem Einlass zu einem Auslass der Drehschieber-Vakuumpumpe förderbar ist.

Eine Drehschieberpumpe nach dem Oberbegriff des Anspruchs 1 ist in der DE 10 2006 038 418 A1 und der EP 2 587 064 A1 offenbart. Eine Reibpaarung die derjenigen ähnelt, die im kennzeichnenden Teil des Anspruchs 1 genannt ist, ist in der EP 3 153 706 A1 im Zusammenhang mit Scrollpumpen und konkret zur Verwendung an einem sogenannten Tip Seal offenbart.

Drehschieber-Vakuumpumpen sind aufgrund ihres allgemein einfachen Aufbaus und der damit verbundenen geringen Herstellungskosten weit verbreitet. Da die Schieber im Betrieb dauerhaft an der Innenwand entlang gleiten, bedarf es besonderer Maßnahmen zur Reibungsreduktion. Im klassischen Fall werden Drehschieber-Vakuumpumpen mit einer Ölschmierung betrieben, d.h. im Förderraum befindet sich eine meist recht große Menge Öl. Dies erfordert einerseits einen gewissen technischen Aufwand zur Ölrückführung und ist im Hinblick auf eine mögliche Reaktion mit einem Prozessgas, also einem zu fördernden Gas, oder auch auf eine mögliche Kontamination eines Rezipienten, also einer angeschlossenen Vakuumkammer, problematisch. Es werden zwar auch andere, meist flüssige oder pastöse Schmierstoffe verwendet. Auch sie können jedoch Prozessgas und Rezipient beeinträchtigen.

Wegen dieser Nachteile sind sogenannte trockene Drehschieber-Vakuumpumpen entwickelt worden, d.h. es wird auf einen zusätzlichen Schmierstoff verzichtet. Die Materialien von Schieber und Gehäusekörper werden daher so gewählt, dass Sie auch ohne Öl oder dergleichen eine geringe Reibung aufweisen, damit Wärmeentwicklung und Verschleiß in einem vertretbaren Bereich gehalten werden. So sind Schieber häufig aus Kunststoff, Graphit und/oder Verbundmaterialien, Gehäusekörper und Rotorkörper dagegen meist aus Eisenwerkstoffen, insbesondere Gusseisen hergestellt. Den bekannten Systemen ist aber gemein, dass sie im Wesentlichen deshalb eine geringe Reibung aufweisen, weil sich aufgrund der allgemein vorhandenen Luftfeuchtigkeit ein Feuchtigkeitsfilm auf den Reibpartnern bildet, welcher schmierend und kühlend wirkt. Ein solcher Feuchtigkeitsfilm geht aber verloren, wenn der Druck in der Pumpe unter den Wasserdampfdruck von etwa 25 hPa fällt, da dann das gesamte Wasser in der Luft nur noch als Dampf vorliegt. Ohne den Feuchtigkeitsfilm steigt die Reibung stark an, sodass die Reibpartner in kürzester Zeit verschleißen können. Aus diesem Grund weisen derartige Pumpen meist ein Dampfdruck-Sicherheitsventil auf, welches den Förderraum belüftet, bevor der Wasserdampfdruck unterschritten wird. Hierdurch kann zwar eine weitgehende Betriebssicherheit gewährleistet werden. Die bekannten trockenen Drehschieber-Vakuumpumpen sind deshalb jedoch in dem erreichbaren Druck, auch als Enddruck bezeichnet, erheblich begrenzt, in der Praxis sogar meist auf einen noch etwas höheren Druck von etwa 100 hPa. Eine derartige Grenze besteht bei ölgeschmierten Pumpen nicht. Vielmehr kann sogar ein sogenanntes Feinvakuum erreicht werden.

Aus den vorgenannten Gründen und insbesondere wegen der Kostenvorteile gegenüber anderen Pumpenarten, wie etwa Scrollpumpen, findet die ölgeschmierte Drehschieber-Vakuumpumpe eine äußerst weite Verbreitung. Sie bildet gewissermaßen den klassischen Fall einer Vakuumpumpe. Die Nachteile der Ölschmierung sind zwar bekannt, doch werden Sie in der Fachwelt nicht in Frage gestellt. Denn für besondere Anwendungsfälle, in denen einerseits ein Feinvakuum bereitgestellt werden muss und andererseits ein Kontakt des Prozessgases mit Öl vermieden werden muss, existieren andere Pumpenarten, wie etwa Scrollpumpen, die trocken ausgeführt sind. Für alle einfacheren Anwendungsfälle bildet die ölgeschmierte Drehschieber-Vakuumpumpe aber seit mehr als 100 Jahren die bewährte Lösung.

Entgegen diesem in der Fachwelt vorherrschenden Vorurteil hat sich der Erfinder die Aufgabe gestellt, eine trockene Drehschieber-Vakuumpumpe mit verbessertem Enddruck bereitzustellen, mittels der auch ein Feinvakuum erzeugbar ist.

Diese Aufgabe wird durch eine Drehschieber-Vakuumpumpe mit den Merkmalen des Anspruchs 1 gelöst, und insbesondere dadurch, dass der Schieber zumindest in einem mit der Innenwand zusammenwirkenden Bereich einen Polyimidpartikel enthaltenden, durch Heißformpressen und Sintern hergestellten Polytetrafluorethylen-Werkstoff umfasst, insbesondere vollständig aus diesem ausgebildet ist, und dass die Innenwand zumindest in einem mit dem Schieber, insbesondere dessen Bereich, zusammenwirkenden Bereich eine Gleitschicht aufweist, die eine durch anodische Oxidation in einem Oxalsäure enthaltenden Elektrolyten gebildete Oxidschicht umfasst, wobei die Drehschieber-Vakuumpumpe eine Temperierungseinrichtung für den Förderraum aufweist.

Mit dieser Kombination von Reibpartnern wurde eine Lösung mit derart niedriger Reibung auch ohne Feuchtigkeitsfilms gefunden, dass die hiermit ausgestattete Drehschieber-Vakuumpumpe auch unterhalb des Wasserdampfdrucks ohne zusätzliches, insbesondere flüssiges, Schmiermittel betrieben werden kann. Folglich wurde durch die Erfindung der Betriebsbereich von trockenen Drehschieber-Vakuumpumpe erheblich vergrößert bzw. wurden die Kostenvorteile von Drehschieber-Vakuumpumpen im Feinvakuumbereich auf ungeahnte Weise mit der Möglichkeit zum Trockenbetrieb verbunden.

Dies ist insbesondere auf die Eigenschaften des erfindungsgemäß für den Schieber bzw. dessen Bereich eingesetzten Polytetrafluorethylen-Werkstoffs zurückzuführen, der Polyimidpartikel enthält und mittels Heißformpressen bzw. Spritzgießen oder Strangpressen hergestellt und zusätzlich einem Sinterprozess unterzogen wird. Der Schieber weist eine sehr hohe Formstabilität und somit Verschleißfestigkeit, auch bei erhöhten Temperaturen auf, was einerseits auf die sehr geringe Porosität und andererseits auf die fein verteilten, nicht agglomerierten Polyimidpartikel zurückzuführen ist.

In Kombination mit den Eigenschaften der durch hartanodische Oxidation in einem, insbesondere kalten, Oxalsäureelektrolyten gebildeten Oxidschicht ergeben sich besondere Vorteile.

Im Vergleich zu Oxidschichten, die in einem Schwefelsäureelektrolyten erzeugt werden, weisen die erfindungsgemäßen Schichten eine sehr geringe Schichtdickentoleranz auf, die in einem Bereich von maximal ± 5 *µ*m, insbesondere bei etwa ± 3 *µ*m, liegt. Das heißt, die gebildete Oxidschicht hat eine sehr ebene Oberfläche, woraus einerseits eine exakte Abdichtung in Kombination mit dem erfindungsgemäßen Schieber und andererseits eine geringe Reibung resultiert, da weniger Unebenheiten bei einer Bewegung der beiden Reibpartner relativ zueinander überwunden werden müssen.

Zudem zeigt die Gleitschicht nur einen geringen Kanteneffekt. Dabei handelt es sich um knochenförmige Aufwerfungen an den Kanten der Schicht, die eine für eine optimale Abdichtung erforderliche exakte Positionierung des Schiebers auf der Gleitschicht verhindern. Da es sich bei den Aufwerfungen grundsätzlich um Unebenheiten handelt, erhöhen diese ebenfalls die Reibung während der Bewegung der beiden Reibpartner relativ zueinander. Auch der geringe Kanteneffekt führt demnach in Kombination mit der Formstabilität des erfindungsgemäßen Schiebers zu einer besonders geringen Verschleißrate sowohl der Gleitschicht als auch des Schiebers.

Als Feinvakuum wird hier ein Vakuum mit einem Druck zwischen 1 und 10⁻³ hPa betrachtet.

Gemäß einer vorteilhaften Ausführungsform ist vorgesehen, dass zumindest im Wesentlichen die gesamte den Förderraum definierende Innenwand die Gleitschicht aufweist. Hierdurch wird nicht nur die Reibung insgesamt verringert, sondern auch die Herstellung der Gleitschicht vereinfacht, da sie nicht punktuell präzise aufgebracht werden muss, sondern global, beispielsweise in einem Oxalsäurebad aufgebracht werden kann. Alternativ oder zusätzlich kann der Schieber insbesondere vollständig aus dem Polytetrafluorethylen-Werkstoff hergestellt sein. Ein solcher Schieber ist kostengünstig zu fertigen, weist aber an allen mit anderen Bauteilen zusammenwirkenden Bereichen eine besonders geringe Reibung auf.

Bei einer weiteren Ausführungsform ist der Schieber, insbesondere radial, verschieblich im Rotorkörper gelagert, wobei der Schieber zumindest in einem mit dem Rotorkörper zusammenwirkenden Bereich einen Polyimidpartikel enthaltenden, durch Heißformpressen und Sintern hergestellten Polytetrafluorethylen-Werkstoff umfasst, wobei der Rotorkörper zumindest in einem mit dem Schieber, insbesondere dessen Bereich, zusammenwirkenden Bereich eine Gleitschicht aufweist, die eine durch anodische Oxidation in einem Oxalsäure enthaltenden Elektrolyten gebildete Oxidschicht umfasst. Hierdurch werden Reibung, Wärmeentwicklung und Verschleiß in der Pumpe noch weiter verringert.

Insoweit sich hierin auf eine radiale Richtung bezogen wird, sei es beispielsweise im Hinblick darauf, dass der Schieber radial über den Rotorkörper hervorsteht oder dass der Schieber radial verschieblich ist, ist hierunter nicht notwendigerweise eine streng radiale Ausrichtung in Bezug auf eine Rotationsachse zu verstehen, sondern nur zumindest eine radiale Komponente. D.h. der Schieber kann z.B. auch entlang einer Achse verschieblich sein, die die Rotationsachse des Rotors nicht schneidet, solange der Schieber mit einer radialen Komponente zumindest zeitweise über den Rotorkörper hervorsteht, welcher üblicherweise im Wesentlichen kreiszylindrisch ausgebildet ist.

Der Schieber kann z.B. mit der Innenwand durch seine Fliehkraft infolge einer Rotation des Rotors und/oder durch eine Vorspannung, beispielsweise mittels einer Feder, in Kontakt gehalten sein.

Bei einer vorteilhaften Weiterbildung weist der Rotorkörper eine Führung für den Schieber auf und die zusammenwirkenden Bereiche von Schieber und Innenwand sind zusammenwirkende Führungsbereiche. Hierdurch kann die Lebensdauer der Pumpe noch weiter verbessert werden.

Alternativ oder zusätzlich weist der Rotorkörper beispielsweise einen Anschlag für den Schieber auf und die Bereiche sind zusammenwirkende Anschlagsbereiche. Die Lebensdauer der Pumpe wird hierdurch noch weiter verbessert. Es können insbesondere sowohl Führungsbereiche als auch Anschlagsbereiche mit erfindungsgemäßer Materialpaarung vorgesehen sein.

Der Schieber kann allgemein beispielsweise in einer Ausnehmung des Rotorkörpers gelagert sein, wobei insbesondere ein Grund der Ausnehmung einen Anschlag für den Schieber bildet. Es kann beispielsweise ein Schieber auch durch den Rotor durchgehend ausgebildet sein und/oder ohne Anschlag im Rotor verschieblich gelagert sein.

Gemäß einer Weiterbildung ist vorgesehen, dass eine Abschlusswand vorgesehen ist, die sich quer, insbesondere zumindest im Wesentlichen senkrecht, zu einer Rotationsachse des Rotors erstreckt und/oder ein jeweiliges Fördervolumen axial begrenzt, wobei der Schieber zumindest in einem mit der Abschlusswand zusammenwirkenden Bereich, insbesondere einem axialen Endbereich und/oder einer Stirnseite des Schiebers, einen Polyimidpartikel enthaltenden, durch Heißformpressen und Sintern hergestellten Polytetrafluorethylen-Werkstoff umfasst, und wobei die Abschlusswand zumindest in einem mit dem Schieber, insbesondere dessen Bereich, zusammenwirkenden Bereich eine Gleitschicht aufweist, die eine durch anodische Oxidation in einem Oxalsäure enthaltenden Elektrolyten gebildete Oxidschicht umfasst.

Die Abschlusswand kann beispielsweise als Teil des Gehäusekörpers ausgebildet sein. Die und/oder eine zweite Abschlusswand kann aber beispielsweise auch durch ein vom Gehäusekörper separates Bauteil, insbesondere Abschlusselement und/oder Lagerplatte, gebildet sein. Insbesondere vorteilhaft ist eine Kombination hiervon, also dass für einen Förderraum bzw. für ein Fördervolumen eine Abschlusswand einteilig mit dem Gehäusekörper und eine zweite Abschlusswand als separates Bauteil ausgebildet ist, wobei insbesondere beide Abschlusswände zumindest im mit dem Schieber zusammenwirkenden Bereich die Gleitschicht aufweisen.

Bei einer besonders vorteilhaften Ausführungsform ist die Abschlusswand einteilig mit dem Gehäusekörper ausgebildet, wobei die Gleitschichten von Abschlusswand und Innenwand nahtlos angrenzen. Hierdurch wird eine äußerst geringe Reibung mit dem Schieber bei dennoch guter Abdichtung und entsprechend guter Pumpleistung erreicht. Eine Körperkante oder Ecke des Gehäusekörpers ist dabei nicht als Naht zu betrachten, solange dort auch eine Gleitschicht vorhanden ist. Alternativ oder zusätzlich können die Gleitschichten besonders einfach in einem gemeinsamen, schichterzeugenden Verfahrensschritt hergestellt sein, beispielsweise indem Innenwand und Abschlusswand gleichzeitig in einem Oxalsäurebad oxidiert werden.

Bei einer Ausführungsform weist der Polytetrafluorethylen-Werkstoff des Schiebers einen Anteil an Polyimidpartikeln zwischen 1 und 25 Gew.-%, bevorzugt zwischen 5 und 20 Gew.-%, besonders bevorzugt zwischen 7 und 15 Gew.-%, insbesondere zwischen 8 und 12 Gew.-%, auf. Die Angaben beziehen sich auf das Trockengewicht des Werkstoffs.

In einer weiteren Ausführungsform weisen die Polyimidpartikel eine mittlere Teilchengröße zwischen 1 und 50 *µ*m, bevorzugt zwischen 5 und 40 *µ*m, besonders bevorzugt zwischen 10 und 30 *µ*m, insbesondere zwischen 15 und 25 *µ*m, auf.

Die Bestimmung der Teilchengröße erfolgt mittels Laserlichtstreuung bzw. Laserbeugung. Ferner erfolgt die Bestimmung der Teilchengröße durch Vermessung rasterelektronenmikroskopischer Aufnahmen.

Die Polyimidpartikel liegen insbesondere in fein verteilter und im Wesentlichen nicht agglomerierter Form in dem Polytetrafluorethylen-Werkstoff vor. Unter "im Wesentlichen" soll dabei verstanden werden, dass nur eine sehr geringe Anzahl von Polyimidpartikeln in Agglomeraten von mehr als zwei Polyimidpartikeln im Werkstoff vorliegen. Anders ausgedrückt sind die Polyimidpartikel homogen in eine Matrix aus Polytetrafluorethylen eingebettet, wobei keine Agglomerate aus mehr als zwei Polyimidpartikeln auftreten. Die Bestimmung der Anzahl an Agglomeraten erfolgt durch Auswertung von rasterelektronenmikroskopischen Aufnahmen.

Besonders vorteilhaft ist es weiterhin, wenn der Polytetrafluorethylen-Werkstoff eine Porosität zwischen 0,1 und 5 %, bevorzugt zwischen 0,1 und 2 %, besonders bevorzugt von weniger als 1 %, aufweist. Die Bestimmung der Porosität erfolgt zum einen mittels lichtmikroskopischer Aufnahmen und zum anderen mittels elektronenmikroskopischer Aufnahmen.

Die homogene Verteilung der Polyimidpartikel in der Polytetrafluorethylen-Matrix sowie die geringe Porosität des Polytetrafluorethylen-Werkstoffs sind insbesondere für dessen Verschleißfestigkeit verantwortlich. Beide Parameter lassen sich durch das Heißformpressverfahren, bei dem das Rohmaterial des Polytetrafluorethylen-Werkstoffs direkt in einem geregelt beheizten Werkzeug unter Druck erwärmt wird, sowie durch das sich anschließende Sinterverfahren steuern. Beträgt die Porosität weniger als 1 %, kann der Polytetrafluorethylen-Werkstoff eine Dichte von bis zu 2,10 g/cm³ aufweisen.

In einer weiteren Ausführungsform der erfindungsgemäßen Pumpe weist die Gleitschicht eine Schichtdicke zwischen 10 und 50 *µ*m, bevorzugt zwischen 15 und 40 *µ*m, besonders bevorzugt zwischen 20 und 30 *µ*m, auf. Die Bestimmung der Schichtdicke erfolgt anhand von elektronenmikroskopischen Schnittaufnahmen.

In einer besonders vorteilhaften Ausgestaltung ist die Gleitschicht zusätzlich mit einem Trockenschmierstoff, insbesondere Polytetrafluorethylen, imprägniert. Der Trockenschmierstoff wird dabei in die Schicht eingelagert, und es findet kein zusätzlicher Schichtaufbau statt. Der Trockenschmierstoff in Verbindung mit dem Polytetrafluorethylen-Werkstoff des Schiebers bewirkt ein verbessertes Gleitverhalten und reduziert somit die Reibung. Die Einlagerung eines Trockenschmierstoffes bietet den weiteren Vorteil, dass bei einem abrasiven Verschleiß der Gleitschicht die Gleiteigenschaften im Wesentlichen erhalten bleiben.

Ebenso kann es bevorzugt sein, dass die Gleitschicht mit einem Trockenschmierstoff, insbesondere Polytetrafluorethylen, beschichtet ist, wobei es hier zu einem zusätzlichen Schichtaufbau kommt. Der zusätzlich aufgebrachte Trockenschmierstoff verbessert die Trockenschmiereigenschaften der Gleitschicht und erhöht deren Lebensdauer. Polytetrafluorethylen besitzt antiadhäsive Eigenschaften und erleichtert somit die Reinigung der Gleitschichtoberfläche.

Alternativ kann die Gleitschicht auch mit Salzlösungen oder mit heißem, insbesondere entsalzten, Wasser nachbehandelt werden. Eine solche Behandlung verschließt die Poren in der Gleitschicht und steigert deren Korrosionsbeständigkeit.

Die Gleitschicht weist vorzugsweise eine Scheinhärte zwischen 400 und 600 HV 0,025, insbesondere zwischen 500 und 550 HV 0,025, auf. Die Messung der Härte erfolgt nach dem Prinzip der Härteprüfung nach Vickers (HV). Dabei wird ein Eindringkörper in Form einer geraden Pyramide mit einer vorgegebenen Prüfkraft senkrecht in die Oberfläche der betreffenden Probe eingedrückt. Da die Grundfläche der Pyramide quadratisch ist, kann aus der Fläche des Prüfeindrucks die Vickers-Härte berechnet werden. Vorliegend wird mit einer Prüfkraft von 0,2452 Newton (HV 0,025) gemessen. Da die Gleitschicht wie oben beschrieben eine Porosität zwischen 0,1 und 5 % aufweisen kann, wird die Härte im vorliegenden Fall auch Schein- oder Mischhärte genannt.

Die Scheinhärten herkömmlicher, insbesondere durch anodische Oxidation in einem Schwefelsäure enthaltenden Elektrolyten gebildeter, Schichten liegen in der Regel um mindestens 50 HV 0,025 niedriger. Aus einer höheren Scheinhärte resultiert eine höhere Verschleißfestigkeit. Dies konnte in einem Taber-Abraser-Test, mit dem sich der Abriebwiderstand verschiedener Materialen ermitteln lässt, gezeigt werden. Bei dem Test wird die Abriebbeanspruchung von zwei Reibrollen erzeugt, die mit einer festgelegten Kraft auf die rotierende Probe gedrückt werden. Die Gleitschicht gemäß der Erfindung zeigte bei einer Kraft von 10 N (Abriebrolle CS 10) erst nach über 90 000 Umdrehungen der Probe eine Abnutzung von 12,5 *µ*m. Herkömmliche Schichten zeigten unter den gleichen Bedingungen diese Abnutzung bereits nach 60 000 Umdrehungen.

Die im Vergleich zu herkömmlichen, insbesondere durch anodische Oxidation in einem Schwefelsäure enthaltenden Elektrolyten gebildeten, Schichten verbesserte chemische Beständigkeit der erfindungsgemäßen Schicht konnte mit der Salzsprühnebelprüfung belegt werden. Dabei handelt es sich um eine nach DIN EN ISO 9227 standardisierte Prüfung zur Bewertung der Korrosionsschutzwirkung von Beschichtungen. Bei der erfindungsgemäßen Schicht kam es erst nach über 2 000 Stunden Einwirkzeit zu ersten feststellbaren Korrosionserscheinungen, während herkömmliche Schichten diese bereits nach der Hälfte der Zeit zeigten.

Der Reibungskoeffizient der Gleitschicht beträgt vorzugsweise weniger als 0,9, besonders bevorzugt weniger als 0,8, insbesondere ungefähr 0,73, wobei die Bestimmung des Reibungskoeffizienten mit einem Stift-Scheibe-Tribometer erfolgt. Der Anpressdruck des Tribometers betrug dabei 5 Newton bei einer Geschwindigkeit von 6 m/min und 9000 U/min.

Die Gleitschicht hat eine sehr hohe Oberflächengüte. Üblicherweise weisen bei Vakuumpumpen die gegeneinander beweglichen Oberflächen ohne erfindungsgemäße Gleitschicht einen Mittenrauwert Ra von etwa 0,2 *µ*m und eine gemittelte Rautiefe Rz von etwa 1,4 *µ*m auf. Eine Gleitschicht gemäß der Erfindung mit einer typischen Schichtdicke von etwa 20 *µ*m zeichnet sich nun insbesondere dadurch aus, dass der Mittenrauwert Ra nach dem Aufbringen der Gleitschicht um nicht mehr als 1,0 *µ*m zunimmt, vorzugsweise um etwa 0,5 *µ*m. Bei herkömmlichen Schichten liegt die Zunahme des Mittenrauwerts Ra typischerweise bei mindestens 1,5 *µ*m. Die gemittelte Rautiefe Rz nimmt nach dem Aufbringen der Gleitschicht mit einer Schichtdicke von etwa 20 *µ*m, vorzugsweise um weniger als 0,3 *µ*m, besonders bevorzugt um weniger als 0,2 *µ*m, insbesondere um weniger als 0,1 *µ*m, zu. Typischerweise nimmt bei herkömmlichen Schichten vergleichbarer Dicke die gemittelte Rautiefe Rz um mindestens 0,3 *µ*m zu.

Gemäß einer weiteren Ausführungsform ist vorgesehen, dass der Gehäusekörper, die Innenwand, der Rotorkörper und/oder die Abschlusswand jeweils zumindest im Bereich der Gleitschicht einen Grundwerkstoff umfasst, der zumindest teilweise aus Aluminium oder einer Aluminiumlegierung gebildet ist und auf den die Gleitschicht aufgebracht ist. Vorzugsweise bestehen diese Teile aus Aluminium oder einer Aluminiumlegierung. Besonders bevorzugt ist der Grundwerkstoff eine Aluminiumlegierung des Typs AlMgSi. Ferner vorteilhaft sind Aluminiumlegierungen des Typs AlMgSiMn, AlMgSiPb oder AlZnMg. Aluminium und Aluminiumlegierungen haben sich als besonders geeignet herausgestellt, einer anodischen Oxidation in einem Oxalsäure enthaltenden Elektrolyten unterzogen zu werden und eine erfindungsgemäße Gleitschicht auszubilden.

Erfindungsgemäß weist die Drehschieber-Vakuumpumpe eine Temperierungseinrichtung für den Förderraum auf. Diese kann beispielsweise als Kühl- und/oder Heizeinrichtung ausgebildet sein, Wärmeübertragungsrippen und/oder Luft und/oder Wasser als Wärmetransportmedium aufweisen und/oder aktive oder passiv ausgebildet sein.

Die Reibung kann weiter verringert und die Lebensdauer der Reibpartner bzw. der Pumpe kann weiter verbessert werden, indem z.B. die Temperierungseinrichtung dazu ausgebildet ist, die Temperatur der Innenwand, des Rotorkörpers, der Abschlusswand und/oder des Schiebers im Betrieb in einem Temperaturbereich zu halten, wobei eine obere Grenze des Temperaturbereichs höchstens 100°C, insbesondere höchstens 80 °C, insbesondere höchstens 60°C, insbesondere höchstens 58°C, und/oder eine untere Grenze des Temperaturbereichs wenigstens 20°C, insbesondere wenigstens 30°C, insbesondere wenigstens 40°C, insbesondere wenigstens 45°C, beträgt. Besonders vorteilhaft ist ein Temperaturbereich von 45°C bis 60°C. Die Temperierungseinrichtung kann beispielsweise konstruktiv auf den Temperaturbereich ausgelegt werden. Alternativ oder zusätzlich kann eine Steuerung für eine, insbesondere aktive, Temperierungseinrichtung vorgesehen und die Steuerung dazu ausgebildet sein, den Temperaturbereich einzuhalten. Dafür kann beispielsweise auch ein Temperatursensor, insbesondere im oder am Gehäusekörper und/oder in oder an der Abschlusswand vorgesehen sein. Selbst wenn die Temperierungseinrichtung zum Einhalten des Temperaturbereichs ausgebildet ist, kann es aber, insbesondere bei besonderen Bedingungen, vorkommen, dass der Temperaturbereich verlassen wird. Maßgeblich ist jedoch ein konstruktiv und/oder steuerungstechnisch anvisierter Temperaturbereich, wie angegeben.

Besonders vorteilhaft ist es, wenn die Temperierungseinrichtung eine Heizeinrichtung aufweist, wobei die Heizeinrichtung und/oder eine Steuereinrichtung für dieselbe dazu ausgebildet ist, die Temperatur an dem oder den genannten Bauteilen auf eine Temperatur im gewünschten Temperaturbereich aufzuheizen, insbesondere in einer Aufwärmphase vor einer Betriebsphase. Hierdurch können Reibung und Verschleiß weiter verringert werden.

Bei einer weiteren Ausführungsform ist der Rotor zumindest einseitig, insbesondere zwei- oder beidseitig durch ein Gleitlager, insbesondere Kunststoff-Gleitlager, gelagert. Hierdurch werden die Gefahr einer chemischen Interaktion zwischen Pumpe und Prozessgas und die Möglichkeit der Kontamination des Rezipienten weiter verringert. Insbesondere ist die Lagerung frei von flüssigen oder anderweitig nicht fest verkörperten Schmierstoffen.

Besonders vorteilhaft ist es, wenn die Drehschieber-Vakuumpumpe zwei- oder mehrstufig ausgebildet ist, d.h. zwei Förderräume mit hierin wirksamen Schiebern aufweist. Hierdurch lässt sich ein besonders niedriger Enddruck bei erfindungsgemäß geringer Reibung und guter Lebensdauer erreichen. Dabei ist insbesondere ein in Förderrichtung erster Förderraum mit der erfindungsgemäßen Materialpaarung der Reibpartner ausgestattet. Hierdurch können Kosten für die Ausbildung von Gleitschicht und Schiebermaterial eingespart werden, und dennoch eine gute

Pumpenleistung, also insbesondere ein relativ niedriger Enddruck erreicht werden.

Ein besonders niedriger Enddruck ist dann erreichbar, wenn beide, zumindest zwei von mehreren oder alle Stufen bzw. Förderräume mit der erfindungsgemäßen Reibpaarung ausgebildet sind.

Die Drehschieber-Vakuumpumpe ist erfindungsgemäß zum Trockenlauf ausgebildet. Insbesondere ist die Pumpe frei von flüssigem oder anderweitig nicht fest verkörperten Schmierstoff, insbesondere Öl, im Förderraum, einem Schmiersystem und/oder einer Schmierstoffrückführeinrichtung.

Beispielsweise kann die Drehschieber-Vakuumpumpe auch frei von einem Dampfdruck-Sicherheitsventil ausgeführt sein, was Herstellkosten einspart.

Die Aufgabe wird auch durch eine Verwendung einer trockenen Drehschieber-Vakuumpumpe zur Erzeugung eines Feinvakuums, insbesondere mit einem Druck unterhalb von 10⁻¹ hPa, insbesondere unterhalb von 10⁻² hPa, gelöst, wobei die Pumpe die Merkmale der erfindungsgemäßen Drehschieber-Vakuumpumpe aufweist.

Die erfindungsgemäße Pumpe und die erfindungsgemäße Verwendung können selbstverständlich im Sinne der hierin beschriebenen Ausführungsformen der jeweils anderen Aspekte vorteilhaft weitergebildet werden.

Die Erfindung wird nachfolgend lediglich beispielhaft anhand der schematischen Zeichnung erläutert.
- Fig. 1: zeigt eine Prinzipdarstellung einer Drehschieber-Vakuumpumpe des Standes der Technik.
- Fig. 2: zeigt eine Drehschieber-Vakuumpumpe des Standes der Technik in einer Schnittdarstellung.
- Fig. 3: zeigt eine weitere Drehschieber-Vakuumpumpe in einer Schnittdarstellung.
- Fig. 4: zeigt die Pumpe der Fig. 3 in einem Längsschnitt.

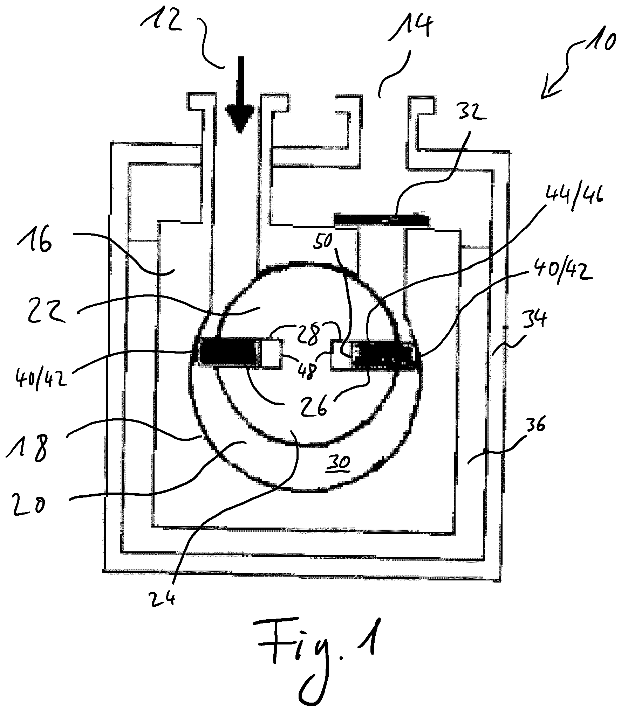

Die in Fig. 1 gezeigte Drehschieber-Vakuumpumpe 10 des Standes der Technik umfasst einen Einlass 12 über den ein Prozessgas im Betrieb der Pumpe 10 wie durch einen Pfeil angedeutet eintritt. Das Prozessgas wird durch die Pumpe 10 zu einem Auslass 14 gefördert.

Die Drehschieber-Vakuumpumpe 10 umfasst außerdem einen Gehäusekörper 16, der mit einer Innenwand 18 einen Förderraum 20 für das Prozessgas definiert. Ein Rotor 22 ist zur Rotation im Förderraum 20 angeordnet und umfasst einen Rotorkörper 24 und zwei Schieber 26. Die Schieber 26 sind jeweils in einer Ausnehmung 28 des Rotorkörpers 24 verschieblich gelagert und durch eine nicht dargestellte Federung am Ausnehmungsgrund nach radial außen und somit gegen die Innenwand 18 vorgespannt. Der Rotor 22 ist exzentrisch zur Innenwand 18 des Gehäusekörpers 16 angeordnet, sodass bei einer Rotation des Rotors die Schieber 26 in den Ausnehmungen 28 verschoben werden aber Kontakt mit der Innenwand 18 halten.

Die Schieber 26 stehen radial über den Rotorkörper 24 hervor und definieren zusammen mit der Innenwand 18 des Gehäusekörpers 16 ein Fördervolumen 30, welches durch Rotation des Rotors 22 vom Einlass 12 zum Auslass 14 förderbar ist. Dabei rotiert der Rotor 22 bezogen auf Fig. 1 gegen den Uhrzeigersinn.

In Förderrichtung vor dem Auslass 14 ist ein Auslassventil 32 vorgesehen, welches ein Rückströmen des Prozessgases in den Förderraum 20, beispielsweise bei Funktionsstörung und/oder Stillstand der Pumpe 10, verhindert. Ein Ventil kann alternativ oder zusätzlich auch am Einlass 12 vorgesehen sein.

Die Vakuumpumpe 10 umfasst ferner ein Außengehäuse 34, welches eine Ölkammer 36 umfasst, die mit Öl zur Schmierung der Pumpe 10 gefüllt ist. Die Ölkammer 36 steht in fluidischem Kontakt (nicht dargestellt) mit dem Förderraum 30 und sorgt so für eine Schmierung des Rotors 22 im Förderraum 30. Es handelt sich hierbei also um den eingangs beschriebenen klassischen Fall einer Drehschieber-Vakuumpumpe mittels der zwar grundsätzlich ein Feinvakuum erreichbar ist. Das Öl kann jedoch zu einer unerwünschten chemischen Reaktion mit dem Prozessgas und/oder einer Kontamination eines an den Einlass 12 angeschlossenen Rezipienten (nicht dargestellt) führen.

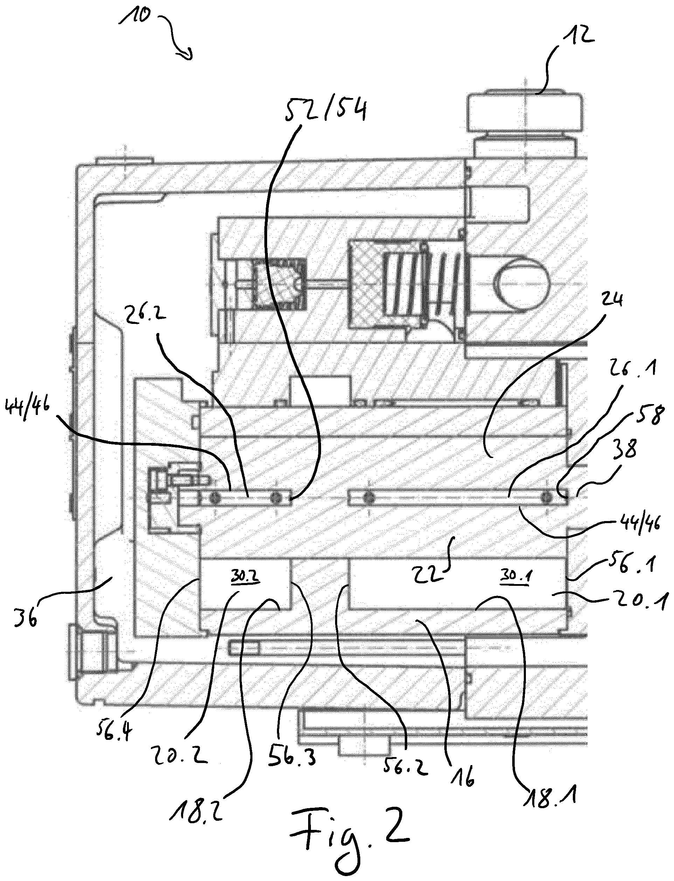

In Fig. 2 ist eine Drehschieber-Vakuumpumpe 10 des Standes der Technik gezeigt. Für entsprechende Merkmale werden hierin gleiche Bezugszeichen verwendet, wobei die entsprechenden Merkmale auch unterschiedlich ausgebildet sein können. Der Längsschnitt der Fig. 2 weist eine Schnittebene auf, die entlang einer Rotationsachse 38 eines Rotors 22 der Pumpe 10 verläuft.

Die Pumpe 10 umfasst einen Einlass 12 und einen aufgrund der gewählten Schnittebene nicht sichtbaren Auslass. In Förderrichtung zwischen Einlass 12 und Auslass sind zwei Förderräume 20.1 und 20.2 vorgesehen, die jeweils durch eine Innenwand 18.1 bzw. 18.2 eines Gehäusekörpers 16 definiert sind.

Der Rotor 22 umfasst einen Rotorkörper 24 und Schieber 26.1 und 26.2, welche in den entsprechenden Förderräumen 20.1 und 20.2 zum Fördern des Prozessgases rotieren. Der Rotor 22 kann beispielsweise auch, insbesondere je Förderraum 20, zumindest einen weiteren Schieber 26 aufweisen.

Auch die Pumpe 10 der Fig. 2 weist eine Ölkammer 36 zum Bereitstellen eines Schmieröls auf. Dennoch lässt sich anhand der Fig. 2 wie auch anhand der Fig. 1 im Folgenden die Erfindung weiter illustrieren.

Mit Bezug auf Fig. 1 ist erfindungsgemäß wenigstens einer der Schieber 26 an einem mit der Innenwand 18 zusammenwirkenden Bereich 40 derart ausgebildet, dass er einen Polyimidpartikel enthaltenden, durch Heißformpressen und Sintern hergestellten Polytetrafluorethylen-Werkstoff umfasst. Die Innenwand 18 weist zumindest in einem mit dem Bereich 40 des Schiebers 26 zusammenwirkenden Bereich 42 eine Gleitschicht auf, die eine durch anodische Oxidation in einem Oxalsäure enthaltenden Elektrolyten gebildete Oxidschicht umfasst. Diese Materialkombination der Reibpartner ermöglicht eine besonders geringe Reibung, sodass insbesondere auf eine Ölschmierung und auf eine Ölkammer 36 verzichtet werden kann. Die beschriebene Gleitschicht ist insbesondere auf der gesamten, insbesondere zylindrischen Innenwand 18 des Gehäusekörpers 16 aufgebracht. Somit wird die geringe Reibung über den gesamten vom Schieber 26 an der Innenwand 18 beschriebenen Reibweg realisiert und die Gleitschicht lässt sich obendrein vorteilhaft, kostengünstig und besonders homogen aufbringen.

Die Reibung kann weiter minimiert werden, indem zum Beispiel der Rotorkörper 24 an einem Führungsbereich 44 für den Schieber 26 die erfindungsgemäße Gleitschicht aufweist, wobei der Schieber 26 an einem korrespondierenden Führungsbereich 46 den erfindungsgemäßen Polytetrafluorethylen-(PTFE-)Werkstoff umfasst. Vorteilhaft kann dies auch beim anderen Schieber 26 bzw. einem gegenüberliegenden Führungsbereich vorgesehen sein, für welche dies der Übersichtlichkeit halber nicht gesondert referenziert ist.

Der Rotorkörper 24 umfasst einen Anschlag mit einem Anschlagsbereich 48, der vorteilhaft mit der erfindungsgemäßen Gleitschicht versehen sein kann. Ein korrespondierender Anschlagsbereich 50 des jeweiligen Schiebers 26 umfasst den erfindungsgemäßen PTFE-Werkstoff. Auch hier werden somit Reibung und Verschließ vermindert. Insbesondere kann der gesamte Schieber aus dem erfindungsgemäßen PTFE-Werkstoff hergestellt sein.

Auch bei der in Fig. 2 gezeigten Pumpe 10 können Führungsbereiche 44 bzw. 46 wenigstens eines oder der Schieber 26 mit der erfindungsgemäßen Materialpaarung ausgestattet sein. Die jeweilige Innenwand 18 kann mit den erfindungsgemäßen Vorteilen die beschriebene Gleitschicht aufweisen. Ein hiermit zusammenwirkender Bereich des jeweiligen Schiebers 26 ist in Fig. 2 nicht sichtbar, weist aber vorteilhaft den beschriebenen PTFE-Werkstoff auf.

In Fig. 2 ist ein weiteres Paar zusammenwirkender Führungsbereiche 52 und 54 von Schieber 26 und Rotorkörper 24 sichtbar, die ebenfalls die erfindungsgemäße Materialpaarung aufweisen können. Während sich die Führungsbereiche 44 und 46 in Längsrichtung erstrecken, sind die Führungsbereiche 52 und 54 an jeweiligen axialen Endbereichen von Schieber 26 bzw. Rotorkörperausnehmung ausgebildet.

Im in Fig. 2 dargestellten Längsschnitt sind Abschlusswände 56 für die Förderräume 20 sichtbar. Sie begrenzen die jeweiligen Fördervolumina 30 jeweils axial. Eine Abschlusswand 56.1 ist durch ein vom Gehäusekörper 16 separates Bauteil gebildet, welches in dieser Ausführungsform auch eine Lagerung für den Rotor 22 bildet. Eine zweite Abschlusswand 56.2 ist einteilig mit dem Gehäusekörper 16 ausgebildet. Gemeinsam begrenzen die Abschlusswände 56.1 und 56.2 ein Fördervolumen 30.1 axial. Das Fördervolumen 30.1, wie auch das Fördervolumen 30.2, wird radial von der Innenwand 18 und dem Rotorkörper 24 begrenzt. In Umfangsrichtung wird das jeweilige Fördervolumen 30 durch den oder die Schieber 26 begrenzt. Hierdurch wird ein jeweils abgeschlossenes Fördervolumen 30 definiert, welches durch Rotation des Rotors 22 vom Einlass 12 zum Auslass gefördert wird.

Ähnlich den Abschlusswänden 56.1 und 56.2 sind die Abschlusswände 56.3 und 56.4 ebenfalls einteilig mit bzw. separat vom Gehäusekörper 16 ausgebildet, wobei auch andere Konstruktionen möglich sind.

Wenigstens eine der Abschlusswände 56 kann vorteilhaft mit der erfindungsgemäßen Gleitschicht ausgestattet sein. Ein Schieber 26 umfasst dabei vorteilhaft zumindest in einem mit der Abschlusswand 56 zusammenwirkenden Bereich 58 den erfindungsgemäßen PTFE-Werkstoff. Somit werden an einer weiteren Stelle die Reibung minimiert und insgesamt Dichtigkeit, Lebensdauer und Pumpleistung der Pumpe 10 verbessert. Auch die weiteren Abschlusswände 56.2, 56.3 und 56.4 sowie die jeweils hiermit zusammenwirkenden, hier nicht gesondert referenzierten Bereiche des jeweiligen Schiebers 26 können mit der erfindungsgemäßen Materialpaarung ausgestattet sein, um die Reibung weiter zu verringern.

Bei einer weiteren Ausführungsform sind Gehäusekörper 16, Rotorkörper 24 und/oder die die Abschlusswände 56.1 und 56.4 bildenden, separaten Bauteile derart ausgebildet, dass sie zumindest in den mit zumindest einem der jeweiligen Schieber 26 zusammenwirkenden Bereichen Aluminium oder eine Aluminiumlegierung als Grundwerkstoff aufweisen. Hierdurch wird nicht nur das Gesamtgewicht der Pumpe 10 verringert, sondern es wird auch ein besonders vorteilhafter Grundwerkstoff für die jeweilige Gleitschicht bereitgestellt.

Auch bei der Pumpe 10 der Fig. 2 gilt, dass die Ölkammer 36 bzw. das Schmieröl und/oder weitere Teile eines Flüssigkeitsschmierungssystems nun weggelassen werden können. Dies spart nicht nur die hiermit verbundenen Kosten, sondern ermöglicht auch völlig neue Anwendungsbereiche der, insbesondere zweistufigen, Drehschieber-Vakuumpumpe 10. Zwar sind die hier beschriebenen Merkmale nicht auf eine zweistufige Drehschieber-Vakuumpumpe beschränkt, jedoch können sie bei einer solchen weitere oder verbesserte Vorteile entfalten. Insbesondere ist hierdurch ein besonders geringer Enddruck erreichbar, wobei Kontamination von Prozessgas und/oder Rezipient vermieden werden.

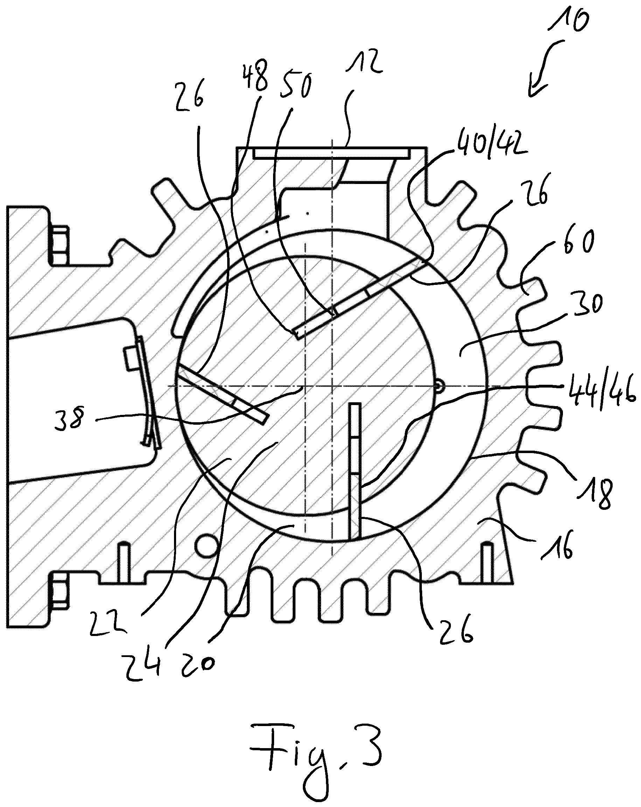

Fig. 3 zeigt eine erfindungsgemäße Drehschieber-Vakuumpumpe 10 in einem Querschnitt. Ein Rotor 22 der Pumpe 10 umfasst einen Rotorkörper 24 und in dieser Ausführungsform drei Schieber 26. Die Schieber 26 sind über den Umfang des Rotorkörpers 24 verteilt angeordnet und in jeweiligen Ausnehmungen desselben radial verschieblich gelagert. Bei dieser Ausführungsform sind die Schieber 26 außerdem schräg in Bezug auf den Umfang des Rotorkörpers 24 ausgebildet. Ihre Verschiebungsachse schneidet nicht die Rotationsachse 38 des Rotors 22. Mit einem jeweils radial über den Rotorkörper 24 hervorstehenden Abschnitt begrenzen die Schieber 26 ein Fördervolumen 30 in Umfangsrichtung.

An Schieber 26 und Innenwand 18 sind Bereiche 40 und 42 mit der erfindungsgemäßen Materialpaarung vorgesehen. Außerdem kann diese Materialpaarung an Führungsbereichen 44, 46 und/oder an Anschlagsbereichen 48, 50 von Schieber 26 bzw. Rotorkörper 24 vorgesehen sein.

Der Gehäusekörper 16 weist eine als Kühleinrichtung ausgebildete Temperierungseinrichtung auf. Die Kühleinrichtung umfasst eine Mehrzahl an Kühlrippen 60, mittels derer Wärme aus dem Förderraum 20 und vom Gehäusekörper 16 abgeführt werden kann. Die Kühleinrichtung kann beispielsweise konstruktiv darauf ausgelegt sein, die Temperatur der Innenwand 18 und/oder anderer pumpaktiver Komponenten im Betrieb in einem Temperaturbereich zu halten. Die Kühleinrichtung kann beispielsweise ein nicht dargestelltes Gebläse umfassen, also aktiv ausgeführt sein. Alternativ oder zusätzlich kann beispielsweise eine Flüssigkeits-Temperierungseinrichtung vorgesehen sein.

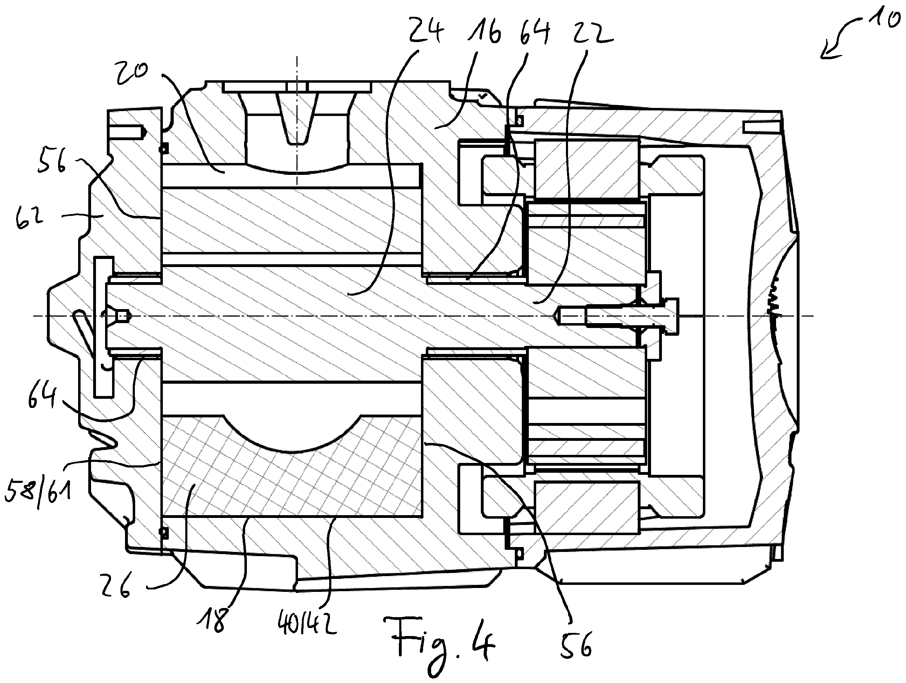

In Fig. 4 ist die Drehschieber-Vakuumpumpe 10 der Fig. 3 in einem Längsschnitt dargestellt. Zu sehen sind unter anderem der Rotor 22 mit dem Rotorkörper 24 und einem der Schieber 26 sowie ein Gehäusekörper 16, der mit einer Innenwand 18 einen zylindrischen Förderraum 20 definiert, in dem der Rotor 22 zur Förderung eines Prozessgases rotieren kann.

Wie in Fig. 4 ersichtlich handelt es sich bei der Pumpe 10 im Gegensatz zu derjenigen der Fig. 2 um eine einstufige Drehschieber-Vakuumpumpe mit nur einem Förderraum 20. Dieser wird axial durch Abschlusswände 56 begrenzt, von denen wiederum eine, die in Fig. 4 linke, durch ein separates Bauteil gebildet ist und eine, die in Fig. 4 rechte, einteilig mit dem Gehäusekörper 16 verbunden ist.

Wie bereits mit Bezug auf Fig. 4 ausgeführt, weist der Schieber 26 an einem Bereich 40, der im Betrieb an einem Bereich 42 der Innenwand 18 entlang gleitet, den erfindungsgemäßen PTFE-Werkstoff auf, während die Innenwand 18 im korrespondierenden Bereich 42 die erfindungsgemäße Gleitschicht aufweist. Die erfindungsgemäße Materialpaarung aus PTFE-Werkstoff und Gleitschicht ist auch an einem Bereich 61 des Schiebers 26 bzw. Bereich 58 der Abschlusswand 56 vorgesehen.

Der Rotor 22 ist vorteilhaft zumindest einseitig, hier zweiseitig, durch das die Abschlusswand 56 bildende Bauteil gelagert. Hier sind dies insbesondere eine separate Lagerplatte 62 und/oder ein Lagerbereich des Gehäusekörpers 16.

Der Rotor 22 kann entsprechend Fig. 4 zur weiteren Reibungsminderung und Vermeidung von Schmiermitteln zumindest einseitig, hier zweiseitig, durch ein Gleitlager 64 gelagert sein, welches insbesondere als Kunststoff-Gleitlager ausgebildet ist.

Die dargestellten Vakuumpumpen sind im Vergleich zum Stand der Technik an zahlreichen Stellen reibungstechnisch optimiert. Insgesamt lässt sich hierdurch eine Drehschieber-Vakuumpumpe zur Bereitstellung eines Feinvakuums im Trockenbetrieb mit guter Lebensdauer und geringem Verschleiß realisieren. Vor Kenntnis der Erfindung bestand in der Fachwelt scheinbar kein Bedarf für eine trockene Drehschieber-Vakuumpumpe im Feinvakuumbereich und zumindest kein Ansatz zur Entwicklung einer solchen, und zwar einerseits wegen der gut verfügbaren Scrollpumpen und andererseits wegen der bisher prinzipbedingten Druckgrenze des Wasserdampfdrucks. Nun zeigt sich, dass die Kostenvorteile der Drehschieber-Vakuumpumpen auch in diesem Anwendungsfall, nämlich trockenlauf in Verbindung mit Feinvakuumerzeugung, nutzbar sind.

### Bezugszeichenliste

- 10: Drehschieber-Vakuumpumpe
- 12: Einlass
- 14: Auslass
- 16: Gehäusekörper
- 18: Innenwand
- 20: Förderraum
- 22: Rotor
- 24: Rotorkörper
- 26: Schieber
- 28: Ausnehmung
- 30: Fördervolumen
- 32: Auslassventil
- 34: Außengehäuse
- 36: Ölkammer
- 38: Rotationsachse
- 40: Bereich
- 42: Bereich
- 44: Führungsbereich
- 46: Führungsbereich
- 48: Anschlagsbereich
- 50: Anschlagsbereich
- 52: Führungsbereich
- 54: Führungsbereich
- 56: Abschlusswand
- 58: Bereich
- 60: Kühlrippen
- 61: Bereich
- 62: Lagerplatte
- 64: Gleitlager

## Patentansprüche

1. Drehschieber-Vakuumpumpe (10) umfassend,
einen Gehäusekörper (16), der mit einer Innenwand (18) wenigstens einen Förderraum (20) definiert, und
einen Rotor (22), der zur Rotation im Förderraum (20) angeordnet ist und einen Rotorkörper (22) und wenigstens einen Schieber (26) aufweist, wobei der Schieber (26) radial über den Rotorkörper (22) hervorsteht und zusammen mit der Innenwand (18) des Gehäusekörpers (16) ein Fördervolumen (30) definiert, welches durch Rotation des Rotors (22) von einem Einlass (12) zu einem Auslass (14) der Drehschieber-Vakuumpumpe (10) förderbar ist,
wobei die Drehschieber-Vakuumpumpe (10) zum Trockenlauf ausgebildet ist,
**dadurch gekennzeichnet,**
**dass** der Schieber (26) zumindest in einem mit der Innenwand (18) zusammenwirkenden Bereich (40) einen Polyimidpartikel enthaltenden, durch Heißformpressen und Sintern hergestellten Polytetrafluorethylen-Werkstoff umfasst,
**dass** die Innenwand (18) zumindest in einem mit dem Schieber (26) zusammenwirkenden Bereich (42) eine Gleitschicht aufweist, die eine durch anodische Oxidation in einem Oxalsäure enthaltenden Elektrolyten gebildete Oxidschicht umfasst, und
**dass** die Drehschieber-Vakuumpumpe (10) eine Temperierungseinrichtung (60) für den Förderraum (30) aufweist.

2. Drehschieber-Vakuumpumpe (10) nach Anspruch 1,
**dadurch gekennzeichnet,**
**dass** der gesamte Schieber aus dem Polytetrafluorethylen-Werkstoff hergestellt ist und/oder die gesamte den Förderraum (30) definierende Innenwand (18) die Gleitschicht aufweist.

3. Drehschieber-Vakuumpumpe (10) nach Anspruch 1 oder 2,
**dadurch gekennzeichnet,**
**dass** der Schieber (26) verschieblich im Rotorkörper (22) gelagert ist und zumindest in einem mit dem Rotorkörper (22) zusammenwirkenden Bereich (44, 48, 52) einen Polyimidpartikel enthaltenden, durch Heißformpressen und Sintern hergestellten Polytetrafluorethylen-Werkstoff umfasst, wobei der Rotorkörper (22) zumindest in einem mit dem Schieber (26) zusammenwirkenden Bereich (46, 50, 54) eine Gleitschicht aufweist, die eine durch anodische Oxidation in einem Oxalsäure enthaltenden Elektrolyten gebildete Oxidschicht umfasst.

4. Drehschieber-Vakuumpumpe (10) nach Anspruch 3,
**dadurch gekennzeichnet,**
**dass** der Rotorkörper (22) eine Führung für den Schieber (26) aufweist und die Bereiche zusammenwirkende Führungsbereiche (44, 46, 52, 54) sind.

5. Drehschieber-Vakuumpumpe (10) nach Anspruch 3 oder 4,
**dadurch gekennzeichnet,**
**dass** der Rotorkörper (22) einen Anschlag für den Schieber (26) aufweist und die Bereiche zusammenwirkende Anschlagsbereiche (48, 50) sind.

6. Drehschieber-Vakuumpumpe (10) nach wenigstens einem der vorhergehenden Ansprüche,
**dadurch gekennzeichnet,**
**dass** eine Abschlusswand (56) vorgesehen ist, die sich quer zu einer Rotationsachse (38) des Rotors (22) erstreckt und ein jeweiliges Fördervolumen (30) axial begrenzt, wobei der Schieber (26) zumindest in einem mit der Abschlusswand (56) zusammenwirkenden Bereich (58) einen Polyimidpartikel enthaltenden, durch Heißformpressen und Sintern hergestellten Polytetrafluorethylen-Werkstoff umfasst, und wobei die Abschlusswand (56) zumindest in einem mit dem Schieber (26) zusammenwirkenden Bereich eine Gleitschicht aufweist, die eine durch anodische Oxidation in einem Oxalsäure enthaltenden Elektrolyten gebildete Oxidschicht umfasst.

7. Drehschieber-Vakuumpumpe (10) nach Anspruch 6,
**dadurch gekennzeichnet,**
**dass** die Abschlusswand (56) Teil des Gehäusekörpers (16) ist.

8. Drehschieber-Vakuumpumpe (10) nach Anspruch 6 oder 7,
**dadurch gekennzeichnet,**
**dass** die und/oder eine zweite Abschlusswand (56) durch ein vom Gehäusekörper (16) separates Bauteil (62) gebildet ist.

9. Drehschieber-Vakuumpumpe (10) nach wenigstens einem der vorhergehenden Ansprüche,
**dadurch gekennzeichnet,**
**dass** der Gehäusekörper (16), der Rotorkörper (24) und/oder die Abschlusswand (56) jeweils zumindest im Bereich (42, 46, 50, 54) der Gleitschicht einen Grundwerkstoff umfasst, der zumindest teilweise aus Aluminium oder einer Aluminiumlegierung gebildet ist und auf den die Gleitschicht aufgebracht ist.

10. Drehschieber-Vakuumpumpe (10) nach wenigstens einem der vorhergehenden Ansprüche,
**dadurch gekennzeichnet,**
**dass** die Temperierungseinrichtung (60) dazu ausgebildet ist, die Temperatur der Innenwand (18), des Rotorkörpers (22), der Abschlusswand (56) und/oder des Schiebers (26) im Betrieb in einem Temperaturbereich zu halten, wobei eine obere Grenze des Temperaturbereichs höchstens 100°C, insbesondere höchstens 80 °C, insbesondere höchstens 60°C, insbesondere höchstens 58°C, und/oder eine untere Grenze des Temperaturbereichs wenigstens 20°C, insbesondere wenigstens 30°C, insbesondere wenigstens 40°C, insbesondere wenigstens 45°C, beträgt.

11. Drehschieber-Vakuumpumpe (10) nach wenigstens einem der vorhergehenden Ansprüche,
**dadurch gekennzeichnet,**
**dass** der Rotor (22) zumindest einseitig durch ein Kunststoff-Gleitlager (64) gelagert ist.

12. Drehschieber-Vakuumpumpe (10) nach wenigstens einem der vorhergehenden Ansprüche,
**dadurch gekennzeichnet,**
**dass** die Drehschieber-Vakuumpumpe (10) zweistufig ausgebildet.

13. Drehschieber-Vakuumpumpe (10) nach wenigstens einem der vorhergehenden Ansprüche,
**dadurch gekennzeichnet,**
**dass** die Drehschieber-Vakuumpumpe (10) frei von einem Dampfdruck-Sicherheitsventil ist.

14. Verwendung einer Drehschieber-Vakuumpumpe nach wenigstens einem der vorstehenden Ansprüche zur Erzeugung eines Feinvakuums.

## Claims

1. A rotary vane vacuum pump (10) comprising
a housing member (16) whose inner wall (18) defines at least one pumping space (20); and
a rotor (22) which is arranged for rotation in the pumping space (20) and has a rotor member (22) and at least one vane (26),
wherein the vane (26) radially projects beyond the rotor member (22) and defines together with the inner wall (18) of the housing member (16) a pumping volume (30) which can be pumped from an inlet (12) to an outlet (14) of the rotary vane vacuum pump (10) by rotation of the rotor (22), wherein the rotary vane vacuum pump (10) is configured for dry running, **characterized in that**,
at least in a region (40) cooperating with the inner wall (18), the vane (26) comprises a polytetrafluoroethylene material containing polyimide particles and manufactured by hot pressing and sintering;
**in that**, at least in a region (42) cooperating with the vane (26), the inner wall (18) has a slide layer which comprises an oxide layer formed by anodic oxidation in an electrolyte containing oxalic acid; and
**in that** the rotary vane vacuum pump (10) has a temperature regulating device (60) for the pumping space (30).

2. A rotary vane vacuum pump (10) in accordance with claim 1, **characterized in that**
the total vane is manufactured from the polytetrafluoroethylene material; and/or **in that** the total inner wall (18) defining the pumping space (30) has the slide layer.

3. A rotary vane vacuum pump (10) in accordance with claim 1 or claim 2, **characterized in that**
the vane (26) is displaceably supported in the rotor member (22) and, at least in a region (44, 48, 52) cooperating with the rotor member (22), comprises a polytetrafluoroethylene material containing polyimide particles and manufactured by hot pressing and sintering, with, at least in a region (46, 50, 54) cooperating with the vane (26), the rotor member (22) having a slide layer which comprises an oxide layer formed by anodic oxidation in an electrolyte containing oxalic acid.

4. A rotary vane vacuum pump (10) in accordance with claim 3, **characterized in that**
the rotor member (22) has a guide for the vane (26) and the regions are cooperating guide regions (44, 46, 52, 54).

5. A rotary vane vacuum pump (10) in accordance with claim 3 or claim 4, **characterized in that**
the rotor member (22) has an abutment for the vane (26) and the regions are cooperating abutment regions (48, 50).

6. A rotary vane vacuum pump (10) in accordance with at least one of the preceding claims,
**characterized in that**
a closure wall (56) is provided which extends transversely to an axis of rotation (38) of the rotor (22) and axially bounds a respective pumping volume (30), with, at least in a region (58) cooperating with the closure wall (56), the vane (26) comprising a polytetrafluoroethylene material containing polyimide particles and manufactured by hot pressing and sintering, and with, at least in a region cooperating with the vane (26), the closure wall (56) having a slide layer which comprises an oxide layer formed by anodic oxidation in an electrolyte containing oxalic acid.

7. A rotary vane vacuum pump (10) in accordance with claim 6, **characterized in that**
the closure wall (56) is part of the housing member (16).

8. A rotary vane vacuum pump (10) in accordance with claim 6 or claim 7, **characterized in that**
the and/or a second closure wall (56) is formed by a component (62) separate from the housing member (16).

9. A rotary vane vacuum pump (10) in accordance with at least one of the preceding claims,
**characterized in that**
the housing member (16), the rotor member (24) and/or the closure wall (56), in each case at least in the region (42, 46, 50, 54) of the slide layer, comprises/comprise a base material which is at least partly formed from aluminum or an aluminum alloy and to which the slide layer is applied.

10. A rotary vane vacuum pump (10) in accordance with at least one of the preceding claims,
**characterized in that**
the temperature regulating device (60) is configured to maintain the temperature of the inner wall (18), of the rotor body (22), of the closure wall (56) and/or of the vane (26) in a temperature range in operation, with an upper limit of the temperature range amounting to at most 100°C, in particular at most 80°C, in particular at most 60°C, and in particular at most 58°C, and/or with a lower limit of the temperature range amounting to at least 20°C, in particular at least 30°C, in particular at least 40°C, and in particular at least 45°C.

11. A rotary vane vacuum pump (10) in accordance with at least one of the preceding claims,
**characterized in that**
the rotor (22) is supported at at least one side by a plastic plain bearing (64).

12. A rotary vane vacuum pump (10) in accordance with at least one of the preceding claims,
**characterized in that**
the rotary vane vacuum pump (10) is formed as two-stage.

13. A rotary vane vacuum pump (10) in accordance with at least one of the preceding claims,
**characterized in that**
the rotary vane vacuum pump (10) is free of a vapor pressure safety valve.

14. Use of a rotary vane vacuum pump in accordance with at least one of the preceding claims for generating a fine vacuum.

## Revendications

1. Pompe à vide à palette (10), comprenant
un corps de boîtier (16) définissant, avec une paroi intérieure (18), au moins une chambre de refoulement (20), et
un rotor (22) agencé pour tourner dans la chambre de refoulement (20) et présentant un corps de rotor (22) et au moins une palette (26),
dans laquelle
la palette (26) fait saillie radialement au-delà du corps de rotor (22) et définit, conjointement avec la paroi intérieure (18) du corps de boîtier (16), un volume de refoulement (30) qui peut être refoulé par rotation du rotor (22) depuis une entrée (12) jusqu'à une sortie (14) de la pompe à vide à palette (10),
la pompe à vide à palette (10) est conçue pour fonctionner à sec, **caractérisée en ce que**
la palette (26) comprend, au moins dans une zone (40) coopérant avec la paroi intérieure (18), un matériau en polytétrafluoroéthylène contenant des particules de polyimide, produit par moulage à chaud et frittage,
**en ce que** la paroi intérieure (18) comprend, au moins dans une zone (42) coopérant avec la palette (26), une couche de glissement qui présente une couche d'oxyde formée par oxydation anodique dans un électrolyte contenant de l'acide oxalique, et
**en ce que** la pompe à vide à palette (10) présente un dispositif de régulation de température (60) pour la chambre de refoulement (30).

2. Pompe à vide à palette (10) selon la revendication 1,
**caractérisée en ce que**
l'ensemble de la palette est fabriqué à partir du matériau en polytétrafluoroéthylène et/ou l'ensemble de la paroi intérieure (18) définissant la chambre de refoulement (30) présente la couche de glissement.

3. Pompe à vide à palette (10) selon la revendication 1 ou 2,
**caractérisée en ce que**
la palette (26) est montée de façon mobile en coulissement dans le corps de rotor (22) et comprend, au moins dans une zone (44, 48, 52) coopérant avec le corps de rotor (22), un matériau en polytétrafluoroéthylène contenant des particules de polyimide et produit par moulage à chaud et frittage, le corps de rotor (22) présentant, au moins dans une zone (46, 50, 54) coopérant avec la palette (26), une couche de glissement qui comprend une couche d'oxyde formée par oxydation anodique dans un électrolyte contenant de l'acide oxalique.

4. Pompe à vide à palette (10) selon la revendication 3,
**caractérisée en ce que**
le corps de rotor (22) présente un guidage pour la palette (26), et les zones sont des zones de guidage coopérant (44, 46, 52, 54).

5. Pompe à vide à palette (10) selon la revendication 3 ou 4,
**caractérisée en ce que**
le corps de rotor (22) présente une butée pour la palette (26), et les zones sont des zones de butée coopérant (48, 50).

6. Pompe à vide à palette (10) selon l'une au moins des revendications précédentes,
**caractérisée en ce que**
il est prévu une paroi de fermeture (56) qui s'étend transversalement à un axe de rotation (38) du rotor (22) et qui délimite axialement un volume de refoulement respectif (30), la palette (26) comprenant, au moins dans une zone (58) coopérant avec la paroi de fermeture (56), un matériau en polytétrafluoroéthylène contenant des particules de polyimide et produit par moulage à chaud et frittage, et
la paroi de fermeture (56) présente, au moins dans une zone coopérant avec la palette (26), une couche de glissement qui comprend une couche d'oxyde formée par oxydation anodique dans un électrolyte contenant de l'acide oxalique.

7. Pompe à vide à palette (10) selon la revendication 6,
**caractérisée en ce que**
la paroi de fermeture (56) fait partie du corps de boîtier (16).

8. Pompe à vide à palette (10) selon la revendication 6 ou 7,
**caractérisée en ce que**
la et/ou une deuxième paroi de fermeture (56) est formée par un composant (62) séparé du corps de boîtier (16).

9. Pompe à vide à palette (10) selon l'une au moins des revendications précédentes,
**caractérisée en ce que**
le corps de boîtier (16), le corps de rotor (24) et/ou la paroi de fermeture (56) comprennent chacun, au moins dans la zone (42, 46, 50, 54) de la couche de glissement, un matériau de base qui est réalisé au moins partiellement d'aluminium ou d'un alliage d'aluminium et sur lequel est appliquée la couche de glissement.

10. Pompe à vide à palette (10) selon l'une au moins des revendications précédentes,
**caractérisée en ce que**
le dispositif de régulation de température (60) est réalisé pour maintenir la température de la paroi intérieure (18), du corps de rotor (22), de la paroi de fermeture (56) et/ou de la palette (26) en fonctionnement dans une plage de température, une limite supérieure de la plage de température étant de 100°C au maximum, en particulier de 80°C au maximum, en particulier de 60°C au maximum, en particulier de 58°C au maximum, et/ou une limite inférieure de la plage de température étant de 20°C au minimum, en particulier de 30°C au minimum, en particulier de 40°C au minimum, en particulier de 45°C au minimum.

11. Pompe à vide à palette (10) selon l'une au moins des revendications précédentes,
**caractérisée en ce que**
le rotor (22) est supporté au moins d'un côté par un palier lisse en matière plastique (64).

12. Pompe à vide à palette (10) selon l'une au moins des revendications précédentes,
**caractérisée en ce que**
la pompe à vide à palette (10) est à deux étages.

13. Pompe à vide à palette (10) selon l'une au moins des revendications précédentes,
**caractérisée en ce que**
la pompe à vide à palette (10) est exempte d'une valve de sécurité à pression de vapeur.

14. Utilisation d'une pompe à vide à palette selon l'une au moins des revendications précédentes pour générer un vide fin.
